# EUROPÄISCHE PATENTSCHRIFT

(11) **EP 0 611 469 B1**
(45) Veröffentlichungstag und Bekanntmachung des Hinweises auf die Patenterteilung: **15.12.1999**
(21) Anmeldenummer: 93919289.4
(22) Anmeldetag: 07.09.1993
(51) Int. Cl.: G09B 23/28

(54) **MEDIZINISCHES TRAININGSGERÄT**
MEDICAL TRAINING APPARATUS
APPAREIL D'ENTRAINEMENT A LA PRATIQUE MEDICALE

(30) Priorität: 07.09.1992 DE 4229808; 03.03.1993 DE 4306630; 26.05.1993 DE 4317555
(43) Veröffentlichungstag der Anmeldung: 24.08.1994
(73) Patentinhaber: Karl Storz GmbH & Co., 78532 Tuttlingen (DE)
(72) Erfinder: Wallwiener, Diethelm, Prof. Dr. med., 69181 Leimen (DE); Bastert, Gunter, Prof. Dr., 69115 Heidelberg (DE)
(74) Vertreter: Münich, Wilhelm, Dr.
(86) Internationale Anmeldenummer: EP9302417
(87) Internationale Veröffentlichungsnummer: WO9406109

(56) Entgegenhaltungen:
- WO-A-93/21619
- DE-A- 2 817 548
- DE-A- 4 105 892
- DE-U- 9 204 934
- US-A- 3 826 019
- DATABASE WPI Section PQ, Week 8825, 25. Juni 1988 Derwent Publications Ltd., London, GB; Class P, AN 88-174425 & SU,A,1 355 994 (SKRIPNIKSKRIPNIKOV YU) 30. November 1987

## Beschreibung

Die Erfindung betrifft ein medizinisches Trainingsgerät (Simulationsgerät, Simulationstrainingsgerät) für die Hohlorganendoskopie, unter anderem auch, aber nicht nur für die Hysteroskopie. Das medizinische Trainingsgerät ist sowohl für die diagnostische als auch für die operative Hohlorganendoskopie bzw. Hysteroskopie geeignet.

Die Hysteroskopie hat sich in der gynäkologischen Fertilitäts-Chirurgie als ein Verfahren mit diagnostischem und operativem Wert etabliert. Durch den Einsatz neuer Präparationstechniken und die Optimierung der bildgebenden endoskopischen Verfahren wurde die operative Hysteroskopie in den letzten Jahren zu einer effektiven Technik mit einem immer breiteren Indikationsspektrum, speziell bei der Therapie der intrauterinen Pathologie.

Für den operativen Einsatz gibt es Hysteroskop-Systeme mit Schäften von bis zu 9 mm Durchmesser. Es können flexible bzw. semiflexible Biopsie- und Fremdkörperfaßzangen, Scheren oder Elektroden, Punktionskanülen, Katheter und Sonden benutzt werden. Weiterhin gibt es für beide Systeme zusätzliche Instrumente für die Laseranwendung mit 400 µm bzw. 600 µm Lichtleitern. Die Hysteroskope sind mit einem Dauerspülsystem ausgestattet. Dabei wird die Spülung bzw. der Gas-Inflow direkt entlang der Optik durch das sogenannte "Optikspülrohr" geleitet. Das Spülmedium gelangt so direkt an das Objektiv der Optik. Der Dauerspülstrom ist die Voraussetzung für optimale Sichtbedingungen. Der Abfluß bzw. Gas-Outflow erfolgt über den Schaft.

Wie in der Endoskopie im allgemeinen, hat die Videoskopie, d.h. die Möglichkeit, die diagnostische und therapeutische Hysteroskopie (wie auch von der Laparoskopie bekannt) unter indirekter Sicht über eine Videokette (auf dem Hysteroskop adaptierte CCD- Kamera, Bildübertragung auf Videomonitor) durchzuführen, diese Verfahren verbessert. Zum einen bietet die Video-Hysteroskopie ergonomische Vorteile (die bisherige Zwangshaltung wird vermieden), zum anderen Vorteile in der Ausbildung und Dokumentation.

Durch die Entwicklung neuer, hysteroskopisch einsetzbarer Präparationstechniken, wie der Einsatz von Operationslasern bzw. hysteroskopischer Resektoskope, wurde eine Optimierung der operativen Hysteroskopie erzielt. Elektro- und Laserenergie finden gleichermaßen Anwendung.

Von der Vielfalt der Operationslasersysteme, die sich in der Gynäkologie durchsetzen konnten, ist für die hysteroskopische Präparation in erster Linie der Nd:YAG-Laser in der Kontakt-Präparationstechnik geeignet. Da der CO₂-Laserstrahl nicht über flexible Lichtleiter zu lenken ist und schon von einem Bruchteile von Millimetern dicken Flüssigkeitsfilm absorbiert wird, hat sich der Nd:YAG-Laser in der Kontaktpräparationstechnik für die hysteroskopische Präparation etabliert.

Aufgrund der wellenlängenspezifischen Eigenschaften werden mittels Nd:YAG-Strahlen, über flexible, dünne Quarzglasfasern geleitet, feine präparatorische Schnitte bei guter Hämostase erzielt. Dadurch kann gleichzeitig in Kontaktpräparation und in Nicht-Kontaktpräparation eine Blutung koaguliert werden, selbst wenn als Distensionsmedium Wasser verwendet wird. Hierbei wird die Nd:YAG-Laserapplikation über flexible oder starre Endoskope mittel sogenannter "bare fiber" (nackter Quarzglasfasern) angewandt.

Hochfrequenz-Elektro-Endochirurgie mittels eines Resektoskops ist ebenfalls eine Möglichkeit der intrauterinen Gewebeabtragung. Hierfür wird ein für die Hysteroresektion modifiziertes Resektoskop eingesetzt (J. Donnez, Instrumentation, in: J. Donnez (Herausgeber), Laser Operative Laparoscopy and Hysteroscopy, Nauwelaerts Printing, Leuven, 207 - 221 (1989); D. Wamsteker, HF electrosurgery versus laser in hysteroscopy, in: G. Bastert, D. Wallwiener (eds): Laser in Gynecology, Possibilities and Limitations, Springer, Berlin, Heidelberg, New York, 1972, in Druck). Dem Operateur stehen Dauerspül-Resektoskope mit Schaftumfang von 7, 8 und 9 mm zur Verfügung. Das mit dieser Methode resezierte Gewebe steht der histologischen Aufarbeitung zur Verfügung. Ein Resektoskop besteht aus Außen- und Innenschaft zur Realisierung der Dauerspülfunktion, HF-Elektrode, Transporteur, Füllstab und Optik.

Während hysteroskopischer Eingriffe ist es erforderlich, das Cavum uteri vollständig und konstant zu dehnen. Die Entfaltung des Cavum uteri für die Hysteroskopie kann über gasförmige Medien, beispielsweise CO₂, oder flüssige Medien erzielt werden. Bei der Verwendung von CO₂-Gas (Cavumdistension mittels CO₂- Insufflation) erhält man ein gutes optisches Bild. Wegen der CO₂-Embolie-Gefahr darf allerdings ein maximaler Flow von 100 ml CO₂ pro Minute nicht überschritten werden. Bei der Cavumdistension mittels Flüssigkeiten kann Hyskon (32 % Dextran 70 in 10 %iger Dextrose) als flüssiges Medium zum Einsatz kommen. Diese Flüssigkeit ist ein optisch klares, nicht toxisches, elektrolytfreies, nicht leitendes, hochvisköses Medium mit einem hohen Brechungsindex, das sich mit Blut nicht mischt und daher speziell für hysteroskopisch-laparoskopische Kombinationseingriffe einsetzbar ist. Niedrigviskoseflüssigkeiten (beispielsweise 5 oder 10 % Dextrose in Wasser, NaCl-Lösung, 4 oder 6 % Dextran) sind ebenfalls geeignet. Unabhängig von der Wahl der Flüssigkeit ist die exakte Druckkontrolle und genaueste Flüssigkeits- und Elektrolytbilanzierung von größter Bedeutung. Bei der Flüssigkeitsdistension sollte ein Druck von 100 mm Hg nicht überschritten werden.

Die Hysteroskopie ist, was den diagnostischen wie auch operativen Einsatz angeht, seit vielen Jahrzehnten bekannt. Aufgrund des technisch schwierigen Handlings hat sie sich aber nicht durchgesetzt. Daher ist ein Modell zum trainieren der diagnostischen und operativen Hysteroskopie wünschenswert.

Es besteht ein Bedürfnis nach einem Endoorgan-Simulationstrainer, der das Training von diagnostischen Verfahren, minimal-invasiv-medizinischen Verfahren und minimal-invasiv-chirurgischen Verfahren im Inneren von Körperhöhlen, im Inneren von Organen und im Inneren von Gefäß- oder Hohlraumrystemen (intraluminal) ermöglicht.

Die Endoskopie ist eine wesentliche Domäne der modernen Urologie geworden. Durch die Zystoskopie unter direkter Sicht der zystokopischen Optik oder modernerweise über eine Video-Chip-Kamera kann der untere Trakt der Harnabflußorgane transurethral eingesehen werden und transurethral die verschiedensten Operationen endoskopisch durchgeführt werden.

Vor dem Hintergrund der modernerweise durch komplizierte Operationsverfahren und modernste Präparationstechniken, wie Hochfrequenz-Elektrochirurgie und Laser möglich gewordene transurethralendoskopische Operationen bis hin zum transurethralen, transvesikalen Einbringen von Endoskopen, mit denen die Harnleiter selbst bis hin zur Niere endoskopiert werden können, hat den transurethralen Zugang zu einem wesentlichen diagnostischen und operativtherapeutischen urologischen Spektrum werden lassen.

Da die Endoskopie in engen Hohlräumen jedoch ein Höchstmaß an Übung erfordert und gerade bei endoskopisch operativen Eingriffen ein hohes Komplikationspotential birgt, besteht ein Bedürfnis nach einem medizinischen Trainingsgerät für die Endoskopie, um dem Ausbildungsbedarf an urologischen Endoskopikern gerecht zu werden.

Die DE-A-41 05 892 offenbart ein medizinisches Trainingsgerät mit einem Gehäuse, das wenigstens einen abgedichteten Hohlraum aufweist. Ferner ist wenigstens ein Zugangsweg in den Hohlraum für wenigstens ein endoskopisches Instrument vorgesehen. Das endoskopische Instrument weist wenigstens einen Kanal auf, durch den eine Flüssigkeit und/oder ein Gas in den Hohlraum eingebracht wird. Hierdurch wird - wie bei einer "richtigen Operation" - ein Überdruck in dem Hohlraum erzeugt.

Bei einer "richtigen Operation" baut sich der durch die Insufflation eines Gases bzw. die Zufuhr einer Flüssigkeit erzeugte Überdruck laufend durch "natürliche Lecks" des jeweiligen Hohlraums in dem menschlichen oder tierischen Körper ab. Der Operateur hat dem durch eine entsprechende Bedienung bzw. Überwachung des Insufflationsgeräts bzw. der verwendeten Flüssigkeits-Pumpe Rechnung zu tragen. Dies kann bei dem aus der DE-A-41 05 892 bekannten Trainingsgerät nicht geübt werden.

Der Erfindung liegt die Aufgabe zugrunde, ein gattungsgemäßes medizinisches Trainingsgerät derart weiterzubilden, daß Diagnose- bzw. Operationsvorgänge unter realen Fluid-Einström- bzw. Abströmbedingungen geübt werden können.

Diese Aufgabe wird erfindungsgemäß dadurch gelöst, daß wenigstens ein Ventil vorgesehen ist, durch das die Flüssigkeit bzw. das Gas einstellbar aus dem Hohlraum abströmt.

Hierdurch können reale Diagiiose- bzw. Operationsbedingungen trainiert werden. Beispielsweise ist es möglich, während eines Trainings das Ventil "plötzlich" zu öffnen oder zu schließen, um zu überprüfen, wie der Trainierende auf die veränderten Bedingungen reagiert, wie sie beispielsweise bei einer realen Operation durch das Herausziehen eines "in einem zweiten Einstich" befindlichen Instruments auftreten.

Vorteilhafte Weiterbildungen sind in den Unteransprüchen beschrieben.

Vorzugsweise ist der Zugangsweg für mindestens ein endoskopisches Instrument und/oder ein endoskopisches Instrumentarium vorgesehen. Die endoskopischen Instrumente sind im wesentlichen Hülsen mit verschiedenem Durchmesser. Sie sind im allgemeinen zylidnerförmig bzw. kreiszylinderförmig. Sie sind ferner flexibel oder starr. Im Inneren der endoskopischen Instrumente können lichtgebende und/oder bildgebende Leiter und andere Instrumente wie beispielsweise mechanische und/oder thermische Präparationsinstrumente einschließlich Laser vorhanden sein.

Vorzugsweise bleibt das Gehäuse auch bei der Anwendung des oder der endoskopischen Instrumente dicht. Die endoskopischen Instrumente werden dadurch angewendet, daß sie eingeführt werden, eingeführt bleiben und/oder wieder ausgeführt werden. Während dieser Vorgänge bleibt das Gehäuse dicht. Hierdurch werden die tatsächlichen Verhältnisse von dem Trainingsgerät besonders gut simuliert.

Nach einer weiteren vorteilhaften Weiterbildung ist das Kompartiment derart abgedichtet, daß in seinem Inneren ein Flüssigkeitsdruck und/oder Gasdruck erzeugbar und/oder aufrechterhaltbar ist. Auch hierdurch werden die tatsächlichen Verhältnisse besonders gut simuliert.

Es können mehrere Gehäuse vorgesehen sein, die vorzugsweise dichtend voneinander abtrennbar sind. Auf diese Weise wird ein Mehrfachgehäusesystem gebildet. In diesem Fall ist es wünschenswert oder sogar erforderlich, die einzelnen Gehäuse voneinander dichtend abtrennen zu können. Durch die Verkettung der einzelnen Gehäuse des Gehäusesystems kann die Verkettung der verschiedenen Organe eines Organsystems simuliert werden. Damit wird ermöglicht, daß in jedem einzelnen Gehäuse organspezifische Manipulationen durchgeführt werden können. In jedem Gehäuse können organspezifische Nachbildungen bzw. organspezifische pathologische Nachbildungen simuliert werden, und zwar durch Kunststoff-Präparate und/oder durch in vivo-Präparate (Fleischpräparate), wobei die letztgenannten künstlich nachgebildet sein können oder von einem Tier übernommen sein können.

In den Organnachbildungen bzw. in den Nachbildungen von Pathologien in den Organen können Kanäle vorgesehen sein. Vorzugsweise sind die Organnachbildungen bzw. Pathologie-Nachbildungen mit Kanälen durchzogen. Diese Kanäle können beispielsweise durch Schlauchsysteme realisiert werden. Sie können aber auch als solche bereits in das die Organnachbildung bildende Material eingearbeitet sein. Durch die Kanäle kann Flüssigkeit, beispielsweise Blut oder gefärbte Flüssigkeit, gepumpt werden, um auf diese Weise die Durchblutung des Organs zu simulieren. Der Trainierende, der in das Gewebe bzw. das Material, welches das Gewebe simuliert, hineinschneidet, kann dann Überprüfen, ob er ein Gefäß verletzt hat oder nicht. Er kann ferner lernen bzw. trainieren, die einmal entstandene Blutung dann auch zu beherrschen.

Eine weitere vorteilhafte Weiterbildung ist dadurch gekennzeichnet, daß die Organnachbildungen in dem oder den Gehäusen vorzugsweise lösbar fixierbar sind. Besonders vorteilhaft ist es, wenn die lösbare Fixierungsmöglichkeit durch einen Klemmechanismus realisiert wird. Der Klemmechanismus kann aus einem oder mehreren Löchern in einem oder mehreren Gehäusen bestehen. Die Präparate oder Module ragen durch eines oder mehrere dieser Löcher in die Schale des Gehäuses, also in das Innere des Gehäuses, hinein. Sie werden mit ihren außen befindlichen Teilen festgeklemmt, beispielsweise durch ein weiteres Gehäuse, das das erstgenannte Gehäuse umgibt. Es sind aber auch andere Befestigungsmöglichkeiten realisierbar. Um die erforderliche Dichtigkeit zu erhalten, kann das äußere Gehäuse vollständig auf das innere Gehäuse (bzw. das Kompartiment) eingepaßt sein. Wenn die Innenschale des Außengehäuses sehr genau mit der Außenfläche des Innengehäuses übereinstimmt, kann die erforderliche Dichtigkeit gewährleistet werden.

Ferner sind vorzugsweise in dem Schalensystem Stromleiter eingelassen, so daß das Präparat einen Kontakt zu einem Stromleiter hat. Wenn die Stromleiter in dem Schalensystem eingelassen werden, kann erreicht werden, daß der Kontakt zu dem Stromleiter stets vorhanden ist, und zwar unabhängig davon, in welchem der Löcher das Präparat eingeklemmt ist.

Das oder die Gehäuse können einstückig sein. Es ist aber auch möglich, das oder die Gehäuse zweistückig oder mehrstückig zu realisieren. Bei zwei- oder mehrstückigen Gehäusen kann sich die Notwendigkeit der Abdichtung ergeben. Dies kann durch eine Dichtung zwischen den verschiedenen Bestandteilen des Gehäuses erreicht werden sowie durch eine Einrichtung, die den erforderlichen Druck auf die Dichtung erzeugt, beispielsweise einen Klemmechanismus.

Vorteilhaft ist für das oder die Gehäuse ein Befestigungssystem bzw. Aufhängungssystem vorgesehen. Dieses besteht vorzugsweise in einem das Innengehäuse umgebenden Gehäuse, welches mehrteilig sein kann.

Bei einem medizinischen Trainingsgerät für die Hysteroskopie wird die oben angegebene Aufgabe gelöst durch ein den Uterus simulierendes Gehäusesystem, dessen Innenraum abdichtbar ist und in dessen den Gebärmutterhals simulierenden Teil eine Dichtung einsetzbar ist.

Bei dem Trainingsgerät kann ein Gehäuse mit einem Unterteil und einem Oberteil vorhanden sein, wobei das Unterteil und das Oberteil dem Uterus und den Eileitern entsprechende Hohlräume aufweisen. In den Hohlraum können Trainingsmodule einsetzbar sein.

Das Oberteil des Gehäuses kann auf das Unterteil aufsetzbar sein. Das in den Hohlraum einsetzbare Trainingsmodul kann ein Operationsmodul oder ein diagnostisches Modul sein. Dieses Trainingsmodul simuliert den Uterus mit allen darin möglichen Erkrankungsformen und den physiologischen Aspekten.

Vorteilhafte Weiterbildungen sind in den Unteransprüchen beschrieben. Vorzugsweise sind das Unterteil und das Oberteil des Gehäuses miteinander lösbar verbindbar. Die lösbare Verbindung zwischen Unterteil und Oberteil wird vorzugsweise durch einen Klemmechanismus geschaffen.

Das Trainingsmodul kann einen Unterteil und einen Oberteil aufweisen. Dies ist insbesondere dann von Vorteil, wenn das Trainingsmodul ein Operationsmodul ist. Unterteil und Oberteil des Trainingsmoduls sind vorzugsweise lösbar miteinander verbindbar.

Eine weitere vorteilhafte Weiterbildung ist dadurch gekennzeichnet, daß das Trainingsmodul bzw. dessen Unterteil und Oberteil schalenförmig ist bzw. sind. Im Inneren des gegebenenfalls schalenförmigen Trainingsmoduls können Präparate vorgesehen sein, beispielsweise Fleisch- oder Modellpräparate.

Vorzugsweise ist in dem den Gebärmutterhals simulierenden Teil des Trainingsgeräts bzw. Trainingsmoduls eine Dichtung einsetzbar. Hierdurch wird die Möglichkeit geschaffen, verschiedene Dichtungen mit verschiedenen Eigenschaften und/oder Größen und/ oder sonstigen Merkmalen einzusetzen.

Nach einer weiteren vorteilhaften Weiterbildung ist der Innenraum des Trainingsgeräts bzw. des Trainingsmoduls abdichtbar. Hierdurch können die tatsächlichen Verhältnisse noch besser simuliert werden.

Eine weitere vorteilhafte Weiterbildung ist dadurch gekennzeichnet, daß in dem Trainingsgerät bzw. in dem Trainingsmodul mindestens ein, vorzugsweise zwei, Ventile vorgesehen sind, vorzugsweise in den die beiden Tubenlumina simulierenden Teilen des Trainingsgeräts bzw. des Trainingsmoduls. Hierdurch kann der Abstrom des Distensionsgases oder der Distensionsflüssigkeit aus dem Uterusinnenraum durch die Tuben in die freie Bauchhöhle naturgetreu nachgeahmt werden und so der Gas- oder Flüssigkeitsabstrom genau justiert werden.

Nach einer weiteren vorteilhaften Weiterbildung ist die Vorderwand des Trainingsmoduls aus einem flexiblen Material, vorzugsweise Kunststoff, Gummi oder Neopren.

Bei einem medizinischen Trainingsgerät für die Endoskopie wird die oben angegebene Aufgabe gelöst durch ein Gehäuse, welches Hohlräume aufweist, die dem Organtrakt der postrenalen Harnabflußwege entsprechen. Durch die Erfindung wird erstmals ein komplexer endoskopischer Simulationstrainer (Uro-Simulationstrainer) für den diagnostischen und operativen Zugang mehrerer, aus verschiedenen Organen bestehender Hohlraumsysteme geschaffen.

Das erfindungsgemäße Trainingsgerät, welches aus vier verschiedenen Organ-Simulationskompartimenten besteht, stellt den gesamten Organtrakt der postrenalen Harnabflußwege dar, nämlich:
(1) die Harnröhre, d.h. die Urethra;
(2) den Raum der Urethra, der durch das Organkompartiment zieht, in dem die Prostatadrüse liegt;
(3) der Blasenhalsbereich, der den Prostatabereich von der Harnblase trennt;
(4) den Eintrittsbereich der Harnröhe in die Harnblase;
(5) die Harnblase selbst;
(6) die Mündungen der beiden Ureteren, d.h. der Harnleiter, die im Simulationstrainer ebenfalls als untere Teile der Harnleiter, die von der Niere zur Blase ziehen, dargestellt sind.

Konsequenterweise ergibt sich durch die modellhafte Darstellung dieser verschiedenen Organkompartimente (Hohlräume in dem Gehäuse) die Möglichkeit der endoskopischen Diagnostik und der endoskopischen Therapie wie folgt:
(1) Übungen diagnostischer und therapeutischer Harnröhrenspiegelung und Blasenspiegelung mit dem Zystoskop;
(2) endoskopische Darstellung der Prostataregion;
(3) Diagnostik von Simulationsmodulen verschiedener anatomischer und krankhafter Veränderungen der Prostata;
(4) operative endoskopische Therapie transurethral der Prostata wie hochfrequenz-elektrochirurgische Resektionen mit dem Elektroresektor von Prostata-Hypertrophien oder Prostatatumoren;
(5) Lasertherapie der Prostata mit eingeführten Laserfasern entweder zur Laseroperation von Tumorgewebe mit dem Nd- YAG-Laser oder Einführen von Nd-YAG-Laserfasern zu interstitiellen Laserthermotherapie;
(6) Diagnostik oder Resektion oder Buschierung von Blasenhalsstenosen;
(7) Diagnostik und räumliche Orientierung sowie Übung anatomischer Gegebenheiten und Diagnostik von pathologischen Veränderungen in der Blase sowie im Bereich der Einmündungsstellung der Ureteren.

Die in dem Gehäuse des erfindungsgemäßen medizinischen Trainingsgeräts für die Endoskopie vorhandenen Hohlräume können auch als Organkompartimente bzw. Organsimulationskompartimente bezeichnet werden. Diese Hohlräume entsprechen dem Organtrakt der postrenalen Harnabflußwege, also dem unteren Harntrakt; sie sind den Hohlräumen in dem Organtrakt der postrenalen Harnabflußwege bzw. in dem unteren Harntrakt nachgebildet.

Vorteilhafte Weiterbildungen sind in den Unteransprüchen beschrieben.

Das Gehäuse weist vorzugsweise ein Unterteil und ein Oberteil auf. Das Unterteil und das Oberteil des Gehäuses können miteinander verbunden sein. Vorzugsweise sind das Unterteil und das Oberteil des Gehäuses miteinander lösbar verbindbar. Vorteilhaft ist es, wenn das Unterteil und das Oberteil des Gehäuses durch einen Klemmechanismus verbindbar sind.

Eine weitere vorteilhafte Weiterbildung ist dadurch gekennzeichnet, daß die Hohlräume miteinander verbunden sind. Vorzugsweise sind die Hohlräume in einer Weise miteinander verbunden, die der Verbindung der Hohlräume in dem Organtrakt der postrenalen Harnabflußwege (also des unteren Harntrakts) entspricht; die Verbindung der Hohlräume miteinander ist der Verbindung der Hohlräume in dem Organtrakt der postrenalen Harnabflußwege bzw. des unteren Harntraktes nachgebildet.

Nach einer weiteren vorteilhaften Weiterbildung sind in die Hohlräume eines oder mehrere Trainingsmodule, vorzugsweise diagnostische Module oder Oprationsmodule, einsetzbar. Die Anordnung ist derart getroffen, daß ein Trainingsmodul in einen Hohlraum einsetzbar ist, bzw. das jeweils ein Trainingsmodul in jeweils einen Hohlraum einsetzbar ist. Die Trainingsmodule sind vorzugsweise auswechselbar. Sie können auch als Organsimulationsmodule bezeichnet werden.

Die Trainingsmodule können aus Kunststoff sein. Die können einen Unterteil und einen Oberteil aufweisen. Vorzugsweise sind die Trainingsmodule bzw. deren Unterteil und Oberteil schalenförmig. Nach einer weiteren vorteilhaften Weiterbildung sind in die Trainingsmodule bzw. in deren Inneres Präparate einsetzbar, beispielsweise Kunststoffpräparate (Kunststoffmodule) oder Fleischpräparate oder Modellpräparate oder tierische Organe oder In- vitro-Präparate.

Durch die Möglichkeit des Einsatzes von verschiedenen diagnostischen Kunststoffmodulen können sämtliche anatomische Gegebenheiten, Besonderheiten oder pathologische Veränderungen innerhalb dieser Organkompartimente simuliert werden. Darüber hinaus kann durch das Einsetzen von In-vitro-Präparaten oder Fleischpräparaten oder dem Einsatz von tierischen Organen in das Kompartiment bzw. Modulsystem das Einbringen von allen urologischen endoskopischen transurethral einsetzbaren Operations-Instrumenten geübt werden und vor allen Dingen das endoskopische Handling und die Durchführung der Geweberesektion, vor allen Dingen die Resektion von Tumorgewebe, trainiert werden.

Das Oberteil des Gehäuses kann auf das Unterteil aufsetzbar sein. Die in die Hohlräume einsetzbaren Trainingsmodule können diagnostische Module oder Operationsmodule sein. Diese Trainingsmodule simulieren die vorab aufgelisteten Organe mit den entsprechenden Organkompartimenten und den möglichen Erkrankungsformen bzw. physiologischen Aspekten.

Nach einer weiteren vorteilhaften Weiterbildung sind die Trainingsmodule miteinander verbindbar, und zwar vorzugsweise in einer Weise, die der Verbindung der Hohlräume in dem Organtrakt der postrenalen Harnabflußwege bzw. des unteren Harntraktes entspricht, also in einer Weise, die der Verbindung der Hohlräume in dem Organtrakt der postrenalen Harnabflußwege bzw. des unteren Harntraktes nachgebildet ist. Die Hohlräume und/oder die Trainingsmodule können mit Dichtungen nach außen und untereinander abgedichtet sein. Die verschiedenen Trainingsmodule bzw. Organmodule sind demnach so miteinander verbunden, daß genau wie beim Menschen mit dem Endoskop von einem Hohlorgankompartiment in das Nächstfolgende vorgedrungen werden kann und so der gesamte Hohlorgantrakt diagnostisch und therapeutisch simuliert werden kann. Die Trainingsmodule bzw. Unterteile und Oberteile der Trainingsmodule sind schalenförmig, so daß im Inneren Kunststoffmodule oder Fleisch oder Modellpräparate zur operativen oder therapeutischen Manipulation eingesetzt werden können. Sämtliche Hohlorgankompartimente sind schalenförmig und sind mit Dichtungen nach außen und untereinander abgedichtet. Vorzugsweise ist in den den unteren Harnröhrenteil simulierenden Teil des Trainingsgerätes bzw. des Trainingsmoduls eine Dichtung einsetzbar. Hierdurch wird die Möglichkeit geschaffen, verschiedene Dichtungen mit verschiedenen Eigenschaften und/oder Größen und/oder sonstigen Merkmalen einzusetzen, so daß das gesamte Trainingsgerät abdichtbar ist, da im Inneren eine Flüssigkeitsdruckdistension und Flüssigkeitsdruckspülung kontinuierlich unabdingbare Voraussetzung für die Simulation der tatsächlichen Verhältnisse ist.

Vorzugsweise weisen die Dichtungen verschiedene Durchmesser auf. Dadurch können mit den verschiedenen Endoskopen Dichtigkeiten erzielt werden und so die Dichtungen den verschiedenen Durchmessern der auf dem Markt befindlichen Endoskope bzw. Zystoskope angepaßt werden.

Die Innenräume der Hohlräume bzw. der Trainingsmodule (Hohlorgane) können anatomisch naturgerecht gestaltet sein, so daß hier eine optisch-visuelle Trainingsmöglichkeit zur Orientierung in den Innenräumen möglich wird. Die Orientierung im Hinblick auf die verschiedenen Kompartimente kann mit der Optik nachempfunden und geübt werden und darüber hinaus durch den Einsatz von Video- Endoskopen die Video-Endoskopie über den Bildschirm geübt werden.

Durch die Möglichkeit der kontinuierlichen Flüssigkeitsdruckdistension und Spülung ergibt sich die Möglichkeit einer sicherheits-technischen Überprüfung des gesamten technischen Equipments, insbesondere der Flüssigkeitsdistensions-Vorrichtungen und Pumpen. So kann sich auch der geübte Endoskopiker immer wieder von der sicheren Funktionstüchtigkeit überzeugen und alle sicherheits-technischen Überprüfungen regelmäßig durchführen. Ein Training des komplizierten technischen Equipments kann so mit dem gesamten Operations-Team ständig auch vor Eingriffen immer wieder geübt werden.

Die Orientierung und das Manipulieren in den Innenräumen wird der In-Vivo-Situation nachempfunden und zwar dadurch, daß die Innenwände der Einsatzmodule aus Kunststoffgummi oder Neopren- Material bestehen und so durch die Erzielung des künstlichen Innendrucks nach außen gewölbt werden müssen, so wie es bei In- Vivo-Gewebe der Fall ist. Nur so kann im Gegensatz zu starren Modellen die naturgetreue Distension der Hohlorgane mit Flüssigkeit nachempfunden und trainiert werden. Auch nur so kann eine sicherheits-technische Überprüfung des Instrumentarium erfolgen.

Die diagnostische Zystoskopie oder Urethroskopie erfordert ebenfalls eine große Übung. Unabhängig von der zu erlernenden diagnostischen Technik, ist auch die Erkennung der in Urethra, Prostata-Region, Blasenhalsregion, Blasenregion, Ureter-Einmündungsregion und/oder im Bereich der Harnleiter selbst befindlichen pathologischen Veränderungen nicht einfach zu erlernen. Von daher sind diagnostische Modelle und Module entwickelt worden, mittels derer es dem Übenden leichter ist, verschiedene pathologische Veränderungen von einander zu unterscheiden und schnell und sicher zu diagnostizieren.

Ein wichtiger, zu erlernender weiterer Part ist die in der modernen Endoskopie unabdingbar gewordene Videoskopie.

Auch der in der Endoskopie geübte Arzt muß lernen, nicht mehr mit einem Auge direkt durch das Endoskop den Innenraum der Hohlorgane zu betrachten, sondern das Handling zu erlernen, ein über eine Video-Kamera transmittiertes Bild zu erzielen und zudem selbst visuell zu verarbeiten.

Durch die Möglichkeit der auswechselbaren Einsätze ist das Erlernen der in den verschiedenen Organkompartimenten befindlichen Erkrankungen ermöglicht.

Dabei sind die Module auswechselbar gestaltet und enthalten jeweils charakteristische Ausgleitungen der aus Silikon nachgebildeten Schleimhautveränderungen oder Tumorgewebsveränderungen. Das Spektrum der auswechselbaren Einsätze reicht von gesunden unauffälligen Schleimhaut- und Organverhältnissen über pathologisch veränderte Formen bis hin zu bösartigen Tumoren.

Im Gegensatz zu dem Training der diagnostischen Endoskopie ist das große Spektrum urologischer Operationsinstrumente für den transurethralen endoskopischen Zugang fast unübersehbar. Wie geschildert reicht er vom Einführen einfacher Sonden und Katheter-Einlagesysteme über Laserpräparationsfasern und Scheren bis hin zu aufwendigen elektro-chirurgischen Resektionsinstrumenten.

Ein besonderer Vorteil des Trainingsgeräts besteht darin, daß durch entsprechende Dichtungssysteme alle Kompartimente (Hohlräume) mit unter Druck eingebrachter Flüssigkeit, im Sinne des Continuous-Flow-Systems, mit Flüssigkeit gefüllt, gespült und mit einem ständigen Spülkreislauf wie in-vivo beim klinischen Einsatz angewandt werden können. Neben dem Einbringen und Üben mit scharfen oder thermischen Präparationswerkzeugen kann darüber hinaus Einbringen von Kathetersystemen in die Blase und die Ureteren geübt werden. Mit Hilfe des transurethralen Zugangs können ebenfalls Schlingenoperationen zur Entfernung von Blasensteinen oder das Einbringen von Schlingen oder Urethro-Renoskopen durch die ureteren Ostien in die Harnleitermodule reniert werden.

Alles in allem können sämtliche urologisch-endoskopischen Instrumente, die für den Einsatz im Bereich der ableitenden Harnorgane bis unterhalb der Niere zum Einsatz kommen, verwendet werden.

Als modernste technische Errungenschaft der diagnostischen operativen Endoskopie kann das Video-Simulationstraining an sämtlichen transurethral einsetzbaren Endoskopen über die Videoskopie trainiert werden.

Neben der Simulation sämtlicher transurethraler Eingriffe bei Blasentumoren oder bei Blasensteinen sowie die Anwendung der endoskopischen Schlingen zur Entfernung von Ureter oder Blasensteinen ist das Training des Einlegens von Ureter-Dauerkathetersystemen ebenfalls möglich.

Weitere Schwerpunkte des erfindungsgemäßen Trainingsgeräts (Simulationstrainingsgeräts) bestehen in folgendem:
Anwendung diagnositscher Systeme: Zystoskope verschiedenster Durchmesser und verschiedener Winkeloptiken, Urethro- Renoskope.
Therapeutische-operative Endoskope. Laserzystoskope zum Einsatz verschiedener Laserfasern, wie vorbeschrieben. Elektro-Resektoskope mit Elektroschlingen, Elektroden oder Koagulationselektronen. Manipulationsinstrumente von Scheren über Greifzangen bis zu Applikationsinstrumenten von Dauerkatheter oder Dauerkatheter-Spülsystemen.

Während transurethraler Eingriffe ist es notwendig, die Hohlorgane konstant mittels Flüssigkeit-Continuous-Flow zu dehnen.

Ausführungsbeispiele der Erfindung werden nachstehend anhand der beigefügten Zeichnung im einzelnen erläutert. In der Zeichnung zeigt
- Fig. 1: eine perspektivische Darstellung eines Trainingsgeräts für die Hysteroskopie,
- Fig. 2: einen Längsschnitt durch eine Dichtung,
- Fig. 3: verschiedene Trainingsmodule,
- Fig. 4: einen Querschnitt durch ein Trainingsgerät,
- Fig. 5: einen Längsschnitt durch das in Fig. 4 gezeigte Trainingsgerät,
- Fig. 6: ein medizinisches Trainingsgerät für die Endoskopie in einer Schnittdarstellung,
- Fig. 7: das in Fig. 6 dargestellte medizinische Trainingsgerät in einer Ansicht von vorne und
- Fig. 8: das in den Fig. 6 und 7 dargestellte medizinische Trainingsgerät in einer Ansicht von hinten.

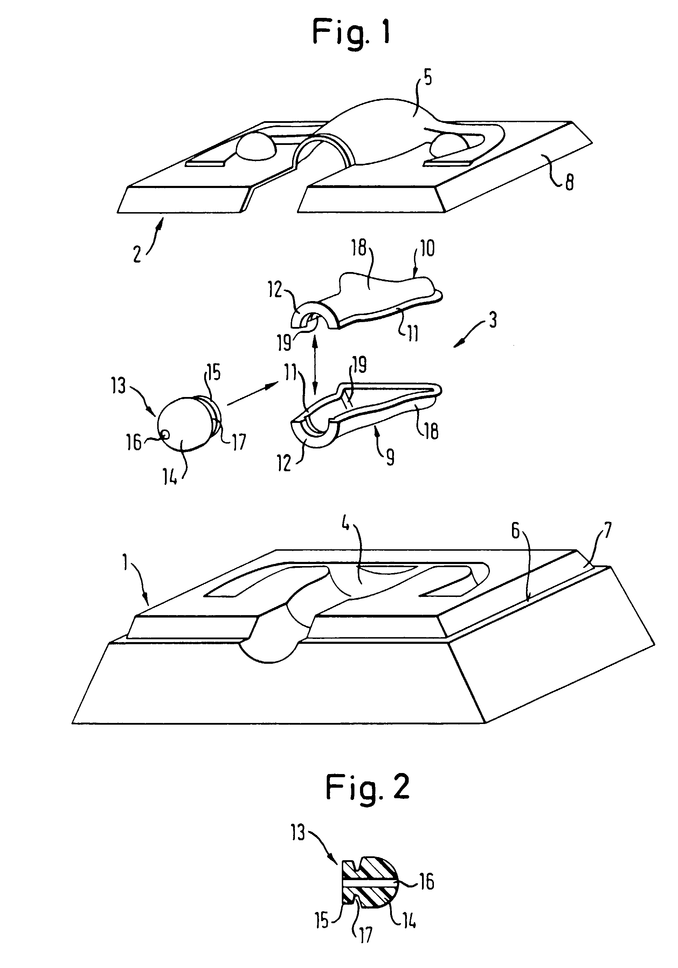

Das in Fig. 1 gezeigte Trainingsgerät für die Hysteroskopie besteht aus einem Gehäuse mit einem Unterteil 1 und einem Oberteil 2 sowie aus einem Trainingsmodul 3. Im Unterteil 1 des Gehäuses ist ein der unteren Hälfte des Uterus entsprechender Hohlraum 4 ausgebildet. Das Oberteil 2 des Gehäuses weist eine der oberen Hälfte des Uterus entsprechende Auswölbung 5 auf. Das Unterteil 1 besitzt einen umlaufenden Absatz 6 mit daran anschließenden Schrägen 7, auf die das Oberteil 2 mit einem entsprechenden schräg nach unten weisenden umlaufenden Rand 8 paßgenau aufsetzbar ist. Der Hohlraum 4 und die Auswölbung 5 bilden zusammen einen dem Uterus entsprechenden Hohlraum. Unterteil 1 und Oberteil 2 sind durch einen in der Zeichnung nicht dargestellten Klemmmechanismus miteinander lösbar verbindbar.

Das Trainingsmodul 3 weist einen Unterteil 9 und einen Oberteil 10 auf, die miteinander lösbar verbindbar sind. Zu diesem Zweck besitzen Unterteil 9 und Oberteil 10 umlaufende Ränder 11, die paßgenau ineinander einsetzbar und wieder voneinander lösbar sind. Das Unterteil 9 des Trainingsmoduls 3 entspricht dem Unterteil 1 des Gehäuses. Es kann in den Hohlraum 4 des Unterteils 1 des Gehäuses paßgenau eingesetzt werden. In ähnlicher Weise entspricht das Oberteil 10 des Trainingsmoduls 3 dem Oberteil 2 des Gehäuses. Es kann in die Auswölbung 5 paßgenau eingesetzt werden. Beim praktischen Gebrauch können zunächst Unterteil 9 und Oberteil 10 des Trainingsmoduls 3 miteinander verbunden werden. Die so geschaffene Einheit wird in den Hohlraum 4 des Unterteils 1 des Gehäuses eingesetzt. Anschließend wird das Oberteil 2 des Gehäuses mit dem Unterteil 1 des Gehäuses verbunden.

In den vorderen Teil 12 des Trainingsmoduls 3 kann eine Dichtung 13 eingesetzt werden, die in Fig. 2 im Schnitt dargestellt ist. Die Dichtung 13 besteht aus einem vorderen, größeren Teil 14 und einem hinteren, kleineren Teil 15, zwischen denen ein Einschnitt 17 in Form einer umlaufenden Ringnut vorgesehen ist. Die Dichtung 13 wird ferner von einem durchlaufenden Kanal 16, der im wesentlichen zylinderförmig ist, in Längsrichtung durchsetzt. Im zusammengesetzten Zustand befindet sich der Einschnitt 17 im Bereich des vorderen Endes 12 des Trainingsmoduls 3. Dort ist im Trainingsmodul 3 ein entsprechender umlaufender Vorsprung vorgesehen.

Das Trainingsmodul 3 bzw. dessen Unterteil 9 und dessen Oberteil 10 sind jeweils schalenförmig. Die Außenseite des Trainingsmoduls 3 wird also jeweils von Schalen 18 gebildet. Im Inneren des Trainingsmoduls 3 sind Präparate 19 vorgesehen.

Der Innenraum des Trainingsgeräts bzw. des Trainingsmoduls 3 ist abdichtbar. In dem Trainingsgerät sind zwei in der Zeichnung nicht dargestellte Ventile vorgesehen, die sich in den die beiden Tubenlumina simulierenden Teilen des Trainingsgeräts befinden. Die Vorderwand des Trainingsmoduls 3 besteht aus einem flexiblen Material, vorzugsweise Kunststoff, Gummi oder Neopren.

Der Gebärmutterhals mit Gebärmutterhalskanal des Traininigsgeräts ist durch ein entsprechendes Material flexibel angelegt und den verschiedenen Durchmessern der auf dem Markt befindlichen Hysteroskope anpaßbar. Mittels verschiedener Dichtungen 13 kann das Handling des Einführens von verschiedenen Hysteroskopen und Videohysteroskopen trainiert werden.

Der Dichtungskanal 16 ist dabei so gestaltet, daß auswechselbare Dichtungen 13 verschiedenen Materials und verschiedenen Durchmessers an die benutzten Hysteroskope angepaßt werden können. Gegenüber einer Gasdistension des Innenraumes des Gebärmuttermodells bzw. einer Flüssigkeitsdistension bis zum definierten Druck von zwischen 100 und 150 mm Hg wird eine Abdichtung erreicht. Der äußere Muttermund der Cervix ist dabei materiell so gestaltet, daß auch ein Anklemmen mit den handelsüblichen Klemmen zur jeweiligen Richtungsmanipulation der Cervix ermöglicht wird. Ebenso kann das Anlegen einer Vakuumglocke zur zusätzlichen Abdichtung der Cervix mittels externer Hysteroskopischer Abdichtung sowohl geübt wie auch im Hinblick auf Einsatzfähigkeit der Vakuumapparate getestet werden.

Der Innenraum des Uterus ist anatomisch naturgerecht gestaltet, so daß hier eine optisch-visuelle Trainingsmöglichkeit zur Orientierung im kleinen Uterusinnenraum ermöglicht wird. Die Orientierung im Hinblick auf die verschiedenen Kompartimente des Cavums kann mit der Optik nachempfunden und geübt werden.

Durch ein in beiden Tubenlumina befindliches Ventil kann der Abstrom des Distensionsgases oder der Distensionsflüssigkeit aus dem Uterusinnenraum durch die Tuben in die freie Bauchhöhle naturgetreu nachgeahmt werden und so der Gas- oder Flüssigkeitsabstrom justiert werden. Damit ergibt sich die Möglichkeit einer sicherheitstechnischen Überprüfung sowohl der Gasinsufflatoren wie der Flüssigkeitsdistensionsvorrichtungen und -pumpen. So kann sich auch der Geübte immer wieder von der sicheren Funktionstüchtigkeit überzeugen und alle sicherheitstechnischen Überprüfungen regelmäßig durchführen. Der Ungeübte kann erkennen, wieviel Gas oder Flüssigkeit in die freie Bauchhöhle aus dem Uterusinnenraum abströmt.

Die Orientierung und das Manipulieren im Innenraum wird der in- vivo-Situation nachempfunden, und zwar dadurch, daß die Vorderwand des Uteruskörpermodells Kunststoff, Gummi oder Neoprenmaterial ist, das durch die Erzielung des künstlichen Innendrucks nach außen gewölbt werden muß, so wie es bei in-vivo-Unterusgewebe der Fall ist.

Nur so kann, im Gegensatz zu starren Modellen, die naturgetreue Cavumdistension mit Gas oder Flüssigkeit nachempfunden und trainiert werden. Auch nur so kann eine sicherheits-technische Überprüfung des Instrumentariums erfolgen.

Die diagnostische Hysteroskopie mit dünnen Instrumenten erfordert relativ große Übung, ist aber technisch nicht so schwierig wie die operative Hysteroskopie. Unabhängig von der zu erlernenden diagnostischen Technik ist aber die Erkennung von im Uterus befindlichen pathologischen Veränderungen nicht einfach zu erlernen. Von daher sollen diagnostische Modelle entwickelt werden, mittels derer es dem Übenden leichter ist, verschiedene pathologische Veränderungen voneinander zu unterscheiden und schnell und sicher zu diagnostizieren.

Erschwert wird die Gebärmutterspiegelung durch die Notwendigkeit einer Distension des Unterusinnenraumes, die mit Gas oder Flüssigkeit erfolgen muß. Beide Distensionsmöglichkeiten erfordern ein aufwendiges technische Equipment, was zudem bestimmten Sicherheitsvorkehrungen genügen muß, um die Patienten nicht entweder durch eine Gasembolie zu gefährden bzw. den Kreislauf der Patientin mit Distensionsflüssigkeit zu überladen.

Ein weiterer zu erlernender Part ist die in der modernen Endoskopie unabdingbar gewordene Videoskopie.

Auch der in der Hysteroskopie geübte Arzt muß lernen, nicht mehr mit einem Auge direkt durch das Endoskop den Innenraum der Gebärmutter zu betrachten sondern das Handling zu erlernen, ein über eine Videokamera transmittierendes Bild zu erzielen und zudem selbst visuell zu verarbeiten.

Durch die Möglichkeit der auswechselbaren Einsätze ist das Erlernen der verschiedenen, im Uterusinnenraum befindlichen Erkrankungen, ermöglicht. Dabei sind die Module 3 auswechselbar gestaltet und enthalten jeweils eine charakteristische Auskleidung 19 der aus Silikon nachgebildeten Gebärmutterschleimhaut. Das Spektrum der auswechselbaren Einsätze reicht von der gesunden, unauffälligen Gebärmutterhaut über pathologisch veränderte Schleimhautformen bis hin zum Karzinom.

Darüber hinaus sind folgende Einsätze verfügbar:
- Submuköse Myome;
- Schleimhautpolypen;
- Gebärmuttermißbildungen von Gebärmutterwandabnormitäten bis hin zur Gebärmutterscheidewand in verschiedenen Ausprägungen;
- intrauterine Synechien (im Uterusinneren befindliche Verwachsungen);
- Modelle mit integrierten intrauterinen Spiralen, die eine normale Position bis hin zu pathologischen Lagen aufweisen (lost IUD);
- Schleimhautpolypen im natrugetreu nachgebildeten Tubenostium (Tubenabgang);
- normaler anatomischer Tubenabgang mit naturgetreuem Lumen zum Training der selektiven Tubenkatherisierung zu diagnostischen oder therapeutischen Zwecken.

Ebenso wie beim Trainingsgerät mit diagnostischen Modulen werden beim Trainingsgerät mit Operationsmodulen die vorab aufgezählten Trainingsmodalitäten ermöglicht.

Bei der operativen Hysteroskopie schwieriger als bei der diagnostischen Hysteroskopie ist, daß Operationshysteroskope einen größeren Außendurchmesser haben und mit zusätzlichen Arbeitskanälen für Operationsinstrumente, von Elektroden bis zu elektrochirurgischen Schlingen und Laserfasern ausgestattet sind. Mit diesem gesamten Equipment kann an den diagnostischen und operativen Modulen 3 gearbeitet und geübt werden.

Hierzu werden ebenfalls spezifische Dichtungen 13 für den Cervicalkanal geliefert. Schwieriger als beim diagnostischen Einsatz ist darüberhinaus die Videosimulationsübung im Innenraum der Operationsmodule 3.

Ebenfalls mit erhöhtem Schwierigkeitsgrad gegenüber der diagnostischen Hysteroskopie ist die Distension mit Gas oder Flüssigkeit. Die Distension wird in natura kompliziert durch die Notwendigkeit des Anbringens eines Continuous-flow-Systems zur ständigen Spülung des Cavums. Am Trainingsgerät kann vor allen Dingen bei den Operationsmodulen 3 mit Fleischpräparaten oder Modellen durch die ständige Spülung des Innenraums eine immerwährende klare Sicht gewährleistet werden. Dabei kann sowohl die Anlage eines Continuous-flow-Systems sowie das Handling und die funktionstechnische Überprüfung des dafür notwendigen Equipments geübt werden.

Auch bei den Operationsmodulen 3 ist der Abstrom der Flüssigkeit durch die im Tubenlumen befindlichen Ventile justierbar, trainierbar und überprüfbar.

Im Gegensatz zu den diagnostischen Modulen 3 bestehen die Operationsmodule 3 aus mehreren Einzelteilen, die zusammengefügt unterschiedliche Öffnungen entstehen lassen. Die schalenförmigen Teile 18 der Operationsmodule 3 werden in den Innenraum 4, 5 des Uterusmodelles 1, 2 eingesetzt. Durch die unterschiedlichen Öffnungen und den Zwischenraum zwischen Modulwand und Außenwand des Modells sowie durch den Klemm-Mechanismus wird der Einsatz von Fleisch- oder Modellpräparaten ermöglicht. Durch die verschiedenen Öffnungen in den Operationsmodulanteilen kann so das eingespannte Präparat mit Hilfe der Operationseinsätze im Arbeitskanal des OP-Hysteroskops (Elektrode, Elektroschlinge, Laserfaser, Laserstrahl, Schere, Zange, Biopsiezange, Messer) wie unter in-vivo-Bedingungen manipuliert, koaguliert oder exzidiert werden. Die unterschiedliche Lokalisation der Öffnungen ermöglicht den Einsatz der Präparate an den unterschiedlichen Stellen der Cavuminnenwand, so daß alle Operationsmanipulationen nachempfunden werden können. Der Klemm-Mechanismus ermöglicht darüber hinaus das schnelle Auswechseln der eingefügten in vitro-Präparate.

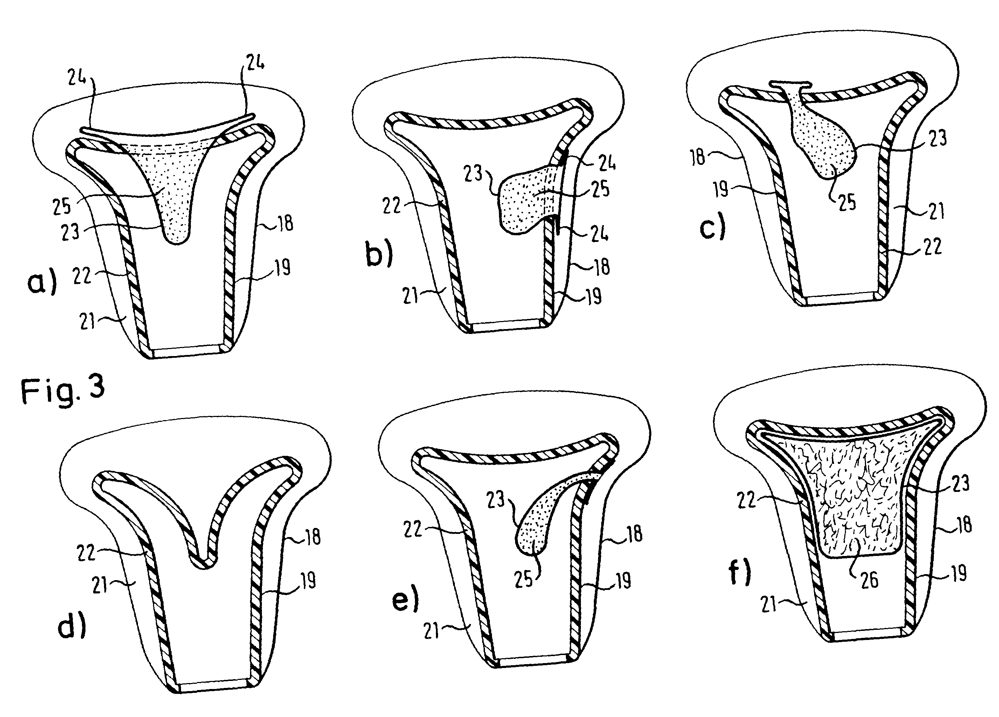

In der Fig. 3 sind Trainingsmodule mit verschiedenen Präparaten 19 dargestellt. Die Fig. 3a zeigt einen Uterus septus. In der Fig. 3b ist ein Myom dargestellt. Die Fig. 3c zeigt ein anderes Myom. In der Fig. 3d ist ein Uterus bicornate gezeigt, in der Fig. 3e ein Polyp und in der Fig. 3f eine Synechiae.

Die in Fig. 3 gezeigten Trainingsmodule bestehen aus einem Uterus 21 aus Kunststoff, in der sich eine Umrahmung 22 aus Silikon befindet, die mit dem Uterus 21 verbunden ist, sowie gegebenenfalls weiteren Bestandteilen. In der Fig. 3a ragt eine Haut 23 ("Wursthaut") in die Umrahmung 22 hinein. Die Haut 23 ist geschlossen. Sie ist an ihren oberen Enden 24 zwischen der Umrahmung 22 und dem Uterus 21 befestigt. Sie ist ferner in ihrem in die Umrahmung 22 hineinragenden Bereich mit Fleisch 25 gefüllt.

Bei dem Trainingsmodul nach Fig. 3b ragt die ebenfalls mit Fleisch 25 gefüllte Haut 23 seitlich in die Umrahmung 22 hinein. Auch hier ist die Haut mit ihren beiden äußeren Enden 24 zwischen der Umrahmung 22 und dem Uterus 21 befestigt.

Das Trainingsmodul gemäß Fig. 3c besitzt ebenfalls eine in die Umrahmung 22 hineinragende Haut 23, die mit Fleisch 25 gefüllt und zwischen der Umrahmung 22 und dem Uterus 21 befestigt ist.

Im Trainingsmodul gemäß Fig. 3d ist der obere Bereich der Umrahmung 22 nach unten verlängert, so daß er in etwa die Form der Haut 23 gemäß Fig. 3a einnimmt.

Das Trainingsmodul gemäß Fig. 3e besitzt eine mit Fleisch 25 gefüllte Haut 23, die seitlich in die Umrahmung 22 hineinragt.

Bei dem Trainingsmodul gemäß Fig. 3f ist im oberen Bereich der Umrahmung 22 eine an der Innenseiten anliegende Haut 23 vorgesehen, die mit dünnen Blättern von tierischer Muskelbinde 26 gefüllt ist.

Die Dichtung 13 ist in den den Gebärmutterhals simulierenden Teil des Traininsgeräts bzw. des Trainingsmoduls 3 einsetzbar.

Durch das Trainingsgerät können folgende Vorteile erreicht werden:
- Distensionsmöglichkeit und -notwendigkeit durch Cervixkanal, (Muttermund)-Ventile und Tubenventile sowie flexibler Uterusmodell-Vorderwand;
- Möglichkeit des Continuous-flow-Systems bei Notwendigkeit der Spülung in vitro- oder Fleischmaterialien bei der operativen Manipulation;
- Anwendung von Rauchabsaugsystemen bei Rauchentwicklung durch Laser-Manipulation intrauterin;
- Möglichkeit der Anwendung monopolare Präparationsinstrumente durch in den Modulen und der Uterusmodellwandung eingelassene Stromleiter;
- Auswechselbarkeit des Innenraums;
- Auswechselbare Einsätze zur Diagnostik von fast allen möglichen intrauterinen pathologischen Faktoren, die zudem aus farbigem Silikon naturgetreu nachgebildet sind;
- Möglichkeit des Trainierens operativer hysteroskopischer Manipulationen intrauerin an Simulationsmodulen, operative Manipulationen an auswechselbaren in vitro- und Fleischpräparaten;
- Anwendung zur Testung und zum Training von Lasersystemen.

Es ist möglich, bei den Moduleinsätzen eine Haut einzulegen. Es ist aber auch möglich, in die Moduleinsätze das Fleisch direkt einzuklemmen oder einzupassen.

Das Trainingsgerät besteht aus einem das innere Genital darstellenden Modulsystem. Für die diagnostische Hysteroskopie können Silikonmodule als Nachbildung der intracavitären Pathologie eingesetzt werden.

Zur Simulation der operativen Hysteroskopie können mittels eines Mehrschalen-Systems in-vitro-Präparate so fixiert werden, daß Manipulationen wie Endometriumresektionen, Myomresektionen und durch ein besonderes Einsatzmodul die Septumabtragung trainiert werden können.

Durch die verschiedenen Operationsmodule kann das eingespannte Präparat mittels OP-Hysteroskop unter Einsatz von Elektroden, Elektroschlingen, ND:YAG-Laser-Fibern sowie Scheren, Zangen und Biopsiezangen wie unter in vivo-Bedinungen manipuliert oder exzidiert werden.

Die unterschiedliche Lokalisation der Öffnungen ermöglicht den Einsatz der Präparate an den unterschiedlichen Stellen der Cavuminnenwand, so daß alle Operationsmanipulationen nachempfunden werden können.

Die Portio ist aus Silikon gefertigt, dichtet das Einsatzmodul nach außen ab und ermöglicht das Einbringen von diagnostischen und Operationshysteroskopen.

Der Innenraum des Uterus ist anatomisch naturgerecht gestaltet, so daß hier eine optisch-visuelle Trainingsmöglichkeit zur Orientierung im kleinen Uterusinnenraum ermöglicht wird. Die Orientierung im Hinblick auf die verschiedenen Kompartimente des Cavum kann mit der Optik nachempfungen und geübt werden.

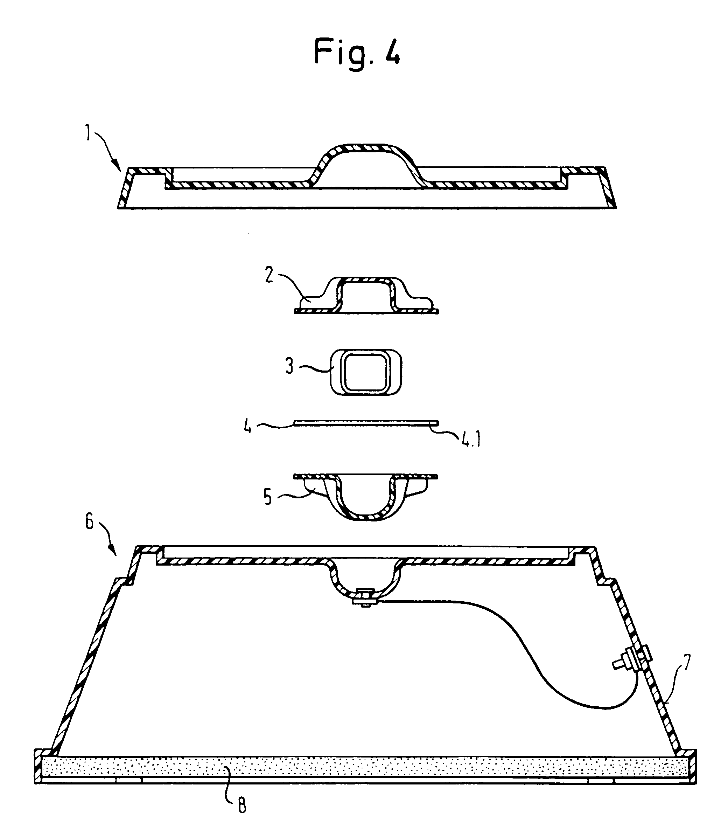

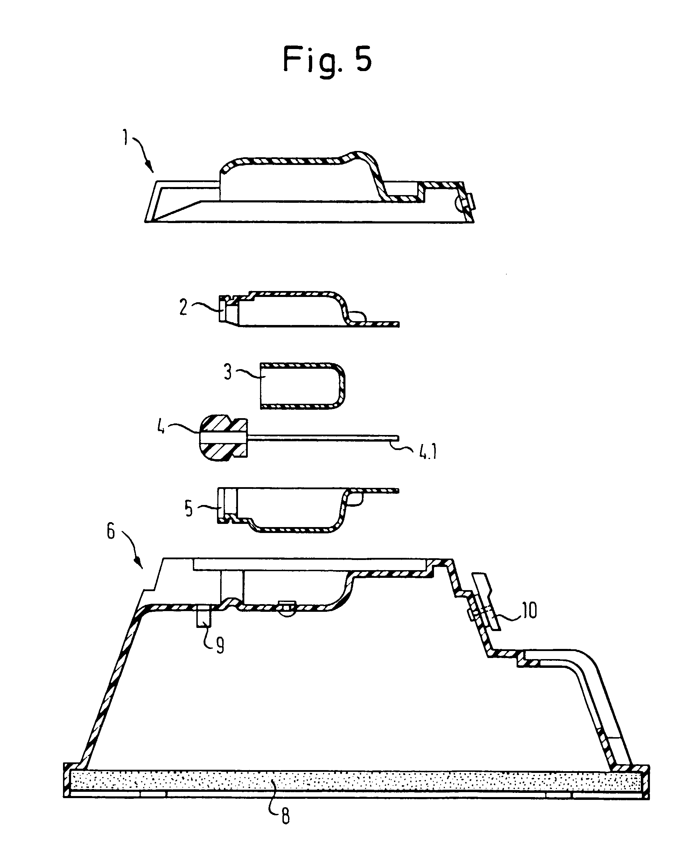

Die Fig. 4 und 5 zeigen ein Trainingsgerät für die Hysteroskopie in einem Querschnitt bzw. einem Längsschnitt. Das Gerät besteht aus einer Bodenplatte 8 mit Stellfüßen, von der sich das GehäuseUnterteil bzw. der Gerätekorpus 6 nach oben erstreckt. Zwischen dem Gerätekorpus 6 und dem Klemmdeckel 1 werden die Bestandteile 2 bis 5 aufgenommen, also die obere Einlegehalbschale 2, das Einsatzmodul 3 (im vorliegenden Fall ein Einsatzmodul zur Septumabtragung), die Silikon-Portio 4 und die untere Einlegehalbschale 5. In die seitliche Kontaktfläche 7 ist eine Schraube zur Stromzufuhr eingeschraubt, von der eine elektrische Leitung zur Vertiefung in der Mitte des Gerätekorpus führt, und zwar in der Mitte der Vertiefung, die die untere Einlegehalbschale 5 aufnimmt. Auf diese Weise ist eine permanente Stromzufuhr möglich. Mit der Bezugsziffer 9 ist eine Schlauchtülle als Abschlußmöglichkeit für Flüssigkeiten bezeichnet. Der Klemmverschluß 10 dient zum Festklemmen des Klemmdeckels 1 an dem Gerätekorpus 6.

Es ist wünschenswert, daß bei dem Trainingsgerät für die Hysteroskopie ein verhältnismäßig hoher Innendruck ausgeführt werden kann, der in der Größenordnung von 100 bis 120 mm Hg liegt. Bei einem derart hohen Druck ist es nicht möglich, die Dichtigkeit durch ein Untergehäuse und ein Obergehäuse zu erreichen. Es ist deshalb erforderlich, in das Gehäuse eine Schale einzusetzen, die aus der unteren Schale 9 und der oberen Schale 10 in Fig. 1 bzw. aus den Halbschalen 2 und 5 in den Fig. 4 und 5 besteht. Die Schalen sind miteinander dicht verbunden, und zwar so dicht, daß sie dem erwähnten Druck standhalten. Im Bereich des vorderen Endes befindet sich der Gebärmutterhals, mit dessen innenliegenden Teil eine Dichtung 4.1. (Fig. 4 und Fig. 5) einstückig verbunden ist, die zwischen den Rändern der Halbschalen 2, 5 liegt, so daß diese zuverlässig abgedichtet werden. Hierdurch wird das wesentliche Problem gelöst, die Dichtigkeit zwischen den Halbschalen 2, 5 sowie zwischen diesen Halbschalen 2, 5 und dem Gebärmutterhals 4 zu gewährleisten. Dadurch wird es möglich, den Gebärmutterhals 4 so zu konzipieren, daß er einerseits vollkommen dicht ist und daß andererseits Instrumente (Hysteroskope) mit verschiedenen Durchmessern eingeführt werden können. Mit diesen Instrumenten wird während des Trainings manipuliert, wodurch Scherkräfte und sonstige Kräfte auftreten können, die zu Undichtigkeiten führen können. Durch die erwähnte Gestaltung des Gebärmutterhalses und der daran befindlichen Dichtung wird die Dichtigkeit jedoch erreicht und auch während des Trainings gewährleistet.

Wie aus den Fig. 4 und 5 ersichtlich, ist der Innenteil des Gebärmutterhalses 4 nach Art eines Sektkorkens konisch ausgestaltet, also sich nach innen konisch erweiterend gestaltet.

Es ist auch möglich, die Schalen einstückig zu realisieren (in den Zeichnungen nicht dargestellt). Auch dann muß allerdings ein Gebärmutterhals vorhanden sein. Die Schalen sind aus verhältnismäßig hartem Material, der Gebärmutterhals aus verhältnismäßig weichem Material gefertigt.

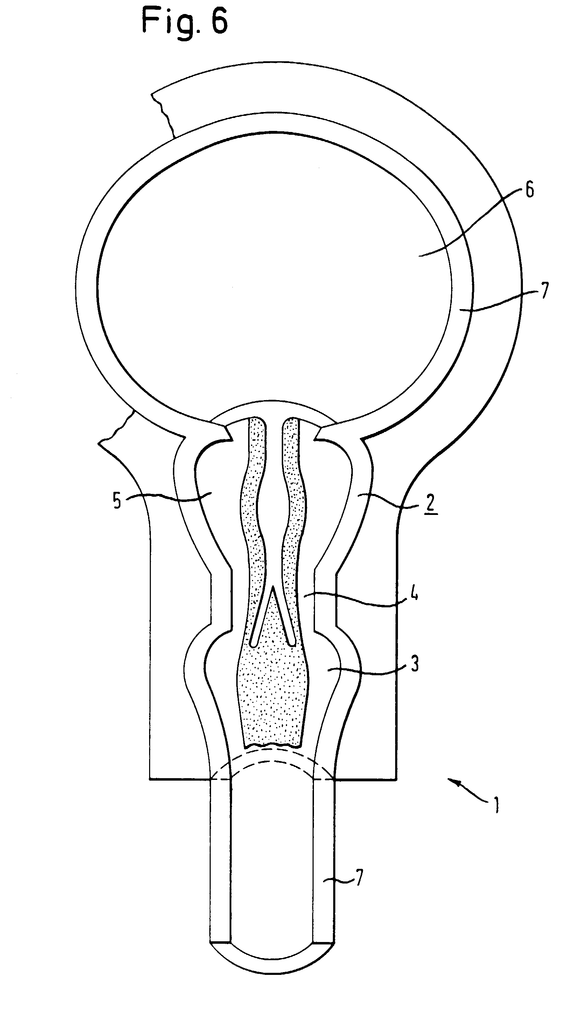

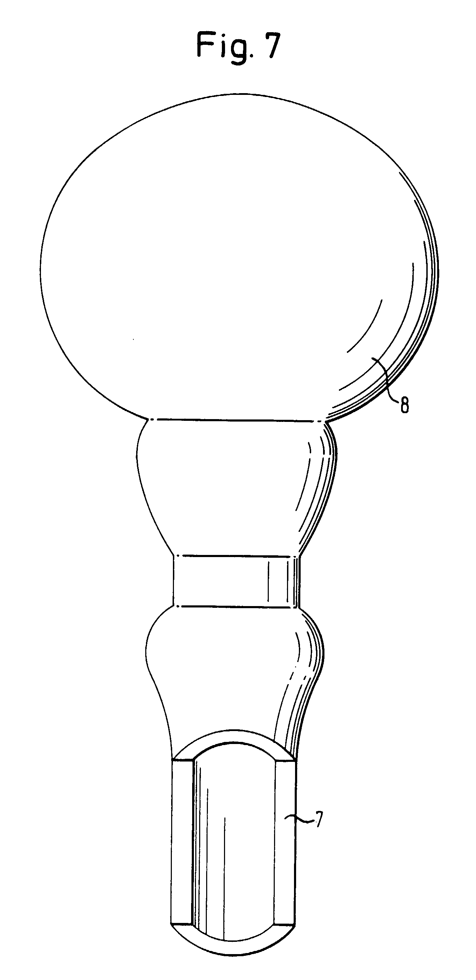

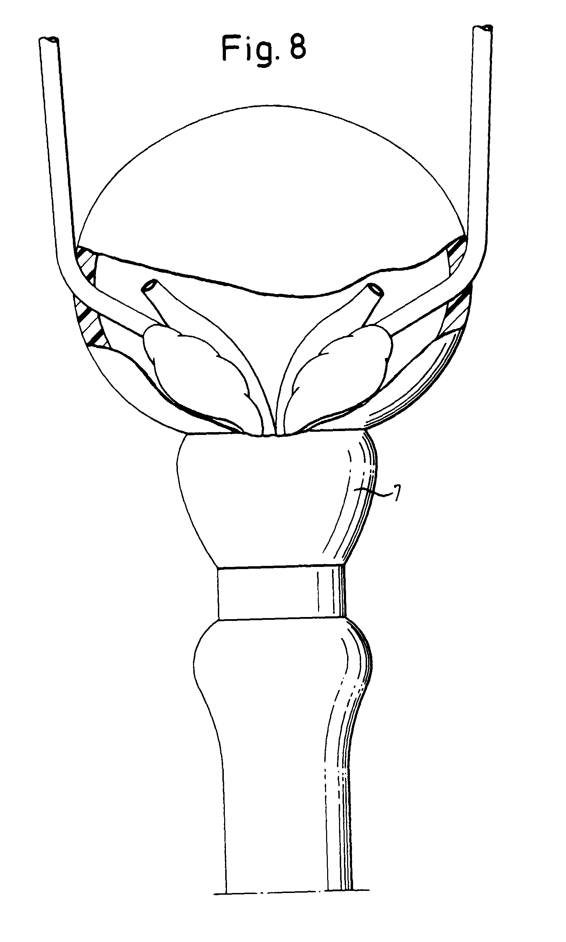

In den Fig. 6 bis 8 ist ein medizinisches Trainingsgerät für die Endoskopie dargestellt. Das ingesamt mit 1 bezeichnete medizinische Trainingsgerät für die Endoskopie besteht aus einem Gehäuse 2, welches Hohlräume 3, 4, 5, 6 aufweist, die dem Organtrakt der postrenalen Harnabflußwege entsprechen. Bei dem Gehäuse 2 handelt es sich um ein komplettes Gehäuse, also um ein Gehäuse, welches sämtliche Hohlräume 3, 4, 5, 6 umfaßt. Das Gehäuse 2 besteht aus einem Unterteil 7 und einem Oberteil 8. Unterteil 7 und Oberteil 8 sind durch einen in der Zeichnung nicht dargestellten Klemmechanismus lösbar miteinander verbunden. Wie aus Fig. 6 ersichtlich, sind die Hohlräume 3, 4, 5, 6 miteinander verbunden. Die Hohlräume 3, 4, 5, 6 entsprechen den oben erläuterten Organkompartimenten. In die jeweiligen Hohlräume 3, 4, 5, 6 können in der Zeichnung nicht gezeigte Organsimulationsmodule (Trainingsmodule) für das Simulationstraining eingesetzt werden. Diese Trainingsmodule können aus Kunststoff sein. Sie können einen Unterteil und einen Oberteil aufweisen. Ferner können die Trainingsmodule bzw. deren Unterteile und Oberteile schalenförmig sein. In die Trainingsmodule bzw. in deren Inneres können Präparate der oben bereits beschriebenen Art einsetzbar sein. Ferner können die Trainingsmodule miteinander verbindbar sein. Die Hohlräume und/oder die Trainingsmodule können mit Dichtungen nach außen und untereinander abgedichtet sein, wobei die Dichtungen verschiedene Durchmesser aufweisen können.

Die Innenräume der Hohlräume bzw. der Trainingsmodule sind anatomisch naturgerecht gestaltet. Dementsprechend bestehen sie aus Kunststoffgummi oder Neopren-Material oder Silikon.

Das Trainingsgerät bzw. der Simulationstrainer weist ein Modulsystem auf, welche die verschiedenen Hohlräume der einzelnen Hohlorgane des unteren Harntraktes darstellt.

## Patentansprüche

1. Medizinisches Trainingsgerät mit einem Gehäuse, das wenigstens einen abgedichteten Hohlraum und wenigstens einen Zugangsweg in den Hohlraum für wenigstens ein endoskopisches Instrument aufweist, das wenigstens einen Kanal aufweist, durch den eine Flüssigkeit und/oder ein Gas in den Hohlraum eingebracht wird,
dadurch **gekennzeichnet**, daß wenigstens ein Ventil vorgesehen ist, durch das die Flüssigkeit bzw. das Gas einstellbar aus dem Hohlraum abströmt.

2. Medizinisches Trainingsgerät nach Anspruch 1, dadurch gekennzeichnet, daß der Zugangsweg für mindestens ein endoskopiesches Instrument und/oder ein endoskopisches Instrumentarium vorgesehen ist.

3. Medizinisches Trainingsgerät nach Anspruch 2, dadurch gekennzeichnet, daß das Gehäuse auch bei der Anwendung des oder der endoskopischen Instrumente dicht bleibt.

4. Medizinisches Trainingsgerät nach einem der vorhergehenden Ansprüche, dadurch gekennzeichnet, daß das Gehäuse derart abgedichtet ist, daß in seinem Inneren ein Flüssigkeitsdruck und/oder Gasdruck erzeugbar und/oder aufrechterhaltbar ist.

5. Medizinisches Trainingsgerät nach einem der vorhergehenden Ansprüche, dadurch gekennzeichnet, daß mehrere Gehäuse vorgesehen sind, die dichtend voneinander abtrennbar sind.

6. Medizinisches Trainingsgerät nach einem der vorhergehenden Ansprüche, dadurch gekennzeichnet, daß in einem oder mehreren Gehäusen Nachbildungen von Organen vorgesehen sind.

7. Medizinisches Trainingsgerät nach Anspruch 6, dadurch gekennzeichnet, daß in den Nachbildungen von Organen Kanäle vorgesehen sind.

8. Medizinisches Trainingsgerät nach Anspruch 6 oder 7, dadurch gekennzeichnet, daß die Nachbildungen von Organen in dem oder den Gehäusen durch einen Klemmechanismus lösbar fixierbar sind.

9. Medizinisches Trainingsgerät für die Hysteroskopie nach einem der vorhergehenden Ansprüche, gekennzeichnet durch ein den Uterus simulierendes Gehäuse, dessen Innenraum abdichtbar ist und in dessen den Gebärmutterhals simulierenden Teil eine Dichtung einsetzbar ist.

10. Trainingsgerät nach Anspruch 9, dadurch gekennzeichnet, daß das Gehäuse aus einem Unterteil (1) und einem Oberteil (2) besteht, die dem Uterus und den Eileitern entsprechende Hohlräume (4, 5) aufweisen, wobei in den Hohlraum ein Trainingsmodul (3) einsetzbar ist.

11. Trainingsgerät nach Anspruch 10, dadurch gekennzeichnet, daß das Unterteil (1) und das Oberteil (2) des Gehäuses miteinander durch einen Klemmechanismus lösbar verbindbar sind.

12. Trainingsgerät nach einem der vorhergehenden Ansprüche, dadurch gekennzeichnet, daß das Trainingsmodul (3) einen Unterteil (9) und einen Oberteil (10) aufweist.

13. Trainingsgerät nach einem der vorhergehenden Ansprüche, dadurch gekennzeichnet, daß das Trainingsmodul (3) bzw. dessen Unterteil (9) und Oberteil (10) schalenförmig (18) ist bzw. sind.

14. Trainingsgerät nach einem der vorhergehenden Ansprüche, dadurch gekennzeichnet, daß im Inneren des Trainingsmoduls (3) Präparate (19) vorgesehen sind.

15. Trainingsgerät nach einem der Ansprüche 10 bis 14, dadurch gekennzeichnet, daß der Innenraum des Gehäuses abdichtbar ist.

16. Trainingsgerät nach einem der vorhergehenden Ansprüche, dadurch gekennzeichnet, daß in dem Trainingsgerät bzw. in dem Trainingsmodul (3) das Ventil bzw. die Ventile in den die beiden Tubenlumina simulierenden Teilen des Trainingsgeräts bzw. des Trainingsmoduls vorgesehen sind.

17. Trainingsgerät nach einem der vorhergehenden Ansprüche, dadurch gekennzeichnet, daß die Vorderwand des Trainingsmoduls (3) aus einem flexiblen Material, wie beispielsweise Kunststoff, Gummi oder Neopren, ist.

18. Trainingsgerät für die Endoskopie nach einem der Ansprüche 1 bis 9,
dadurch gekennzeichnet, daß
das bzw. die Gehäuse (2) Hohlräume (3, 4, 5, 6) aufweist bzw. aufweisen die dem Organtrakt der postrenalen Harnabflußwege entsprechen, wobei die Hohlräume miteinander verbunden sind.

19. Trainingsgerät nach Anspruch 18, dadurch gekennzeichnet, daß das bzw. die Gehäuse (2) ein Unterteil (7) und ein Oberteil (8) aufweist bzw. aufweisen, die durch einen Klemmechanismus lösbar miteinander verbunden sind.

20. Trainingsgerät nach Anspruch 18 oder 19, dadurch gekennzeichnet, daß in die Hohlräume eines oder mehrere Trainingsmodule diagnostische Module oder Operationsmodule einsetzbar sind, wobei die Trainingsmodule aus Kunststoff sind, wobei die Trainingsmodule einen Unterteil und einen Oberteil aufweisen und wobei die Trainingsmodule bzw. deren Unterteil und deren Oberteil schalenförmig sind.

21. Trainingsgerät nach Anspruch 20, dadurch gekennzeichnet, daß in die Trainingsmodule Präparate, beispielsweise Kunststoffpräparate (Kunststoffmodule) oder Fleischpräparate oder Modellpräparate oder tierische Organe oder in vitro- Präparate einsetzbar sind.

22. Trainingsgerät nach Anspruch 20 oder 21, dadurch gekennzeichnet, daß die Trainingsmodule miteinander verbindbar sind.

23. Trainingsgerät nach einem der Ansprüche 18 bis 22, dadurch gekennzeichnet, daß die Hohlräume und/oder Trainingsmodule mit Dichtungen nach außen und untereinander abgedichtet sind, wobei die Dichtungen verschiedene Durchmesser aufweisen.

24. Trainingsgerät nach einem der Ansprüche 18 bis 23, dadurch gekennzeichnet, daß die Innenräume der Hohlräume bzw. der Trainingsmodule anatomisch naturgerecht gestaltet sind und/ oder daß die Innenräume der Hohlräume bzw. der Trainingsmodule aus Kunststoff, Gummi oder Neopren-Material oder Silikon bestehen.

## Claims

1. Medical training apparatus comprising a housing comprising at least one sealed cavity and at least one path for access into said cavity for at least one endoscopic instrument including at least one duct through which a liquid and/or a gas is introduced into said cavity,
**characterised** in that at least one valve is provided through which the liquid or the gas flows out from said cavity in an adjustable manner.

2. Medical training apparatus according to Claim 1, characterised in that said access path is provided for at least one endoscopic instrument and/or one set of endoscopic instruments.

3. Medical training apparatus according to Claim 2, characterised in that said housing remains tight even during the application of endoscopic instrument or instruments.

4. Medical training apparatus according to any of the preceding claims, characterised in that said housing is so sealed that a liquid pressure and/or gas pressure can be created and/or maintained within the housing.

5. Medical training apparatus according to any of the preceding Claims, characterised in that several housings are provided which are designed for being isolated from each other in a sealed manner.

6. Medical training apparatus according to any of the preceding Claims, characterised in that imitations of organs are provided in one or several housings.

7. Medical training apparatus according to Claim 6, characterised in that ducts are provided in said imitations of organs.

8. Medical training apparatus according to Claim 6 or 7, characterised in that said imitations of organs are adapted to be detachably fixed by means of a clamping mechanism in said housing or housings.

9. Medical training apparatus for hysteroscopy according to any of the preceding Claims, characterised by an uterus-simulating housing enclosing a cavity adapted to be sealed and comprising a cervix-simulating part into which a seal can be inserted.

10. Training apparatus according to Claim 9, characterised in that said housing consists of an upper part (1) and a lower part (2), each comprising the cavities (4, 5) corresponding to the uterus and the fallopian tubes, wherein a training module (3) can be inserted into said cavity.

11. Training apparatus according to Claim 10, characterised in that said lower part (1) and said upper part (2) of said housing are adapted to be detachably connected to each other by means of a clamping mechanism.

12. Training apparatus according to any of the preceding Claims, characterised in that said training module (3) comprises a lower part (9) and an upper part (10).

13. Training apparatus according to any of the preceding Claims, characterised in that said training module (3) or its upper part (9) and its lower part (10), respectively, is or are shell-shaped designs.

14. Training apparatus according to any of the preceding Claims, characterised in that specimens (19) are provided inside said training module (3).

15. Training apparatus according to any of the Claims 10 to 14, characterised in that the cavity inside said housing can be sealed.

16. Training apparatus according to any of the preceding Claims, characterised in that in the training apparatus or in said training module (3), respectively, said valve or said valves, respectively, are provided in those parts of the training apparatus or said training module, respectively, which simulate the two tubal lumina.

17. Training apparatus according to any of the preceding Claims, characterised in that the front wall of said training module (3) is made of a flexible material such as synthetic resin, rubber or neoprene.

18. Training apparatus for endoscopy according to any of the Claims 1 to 9,
characterised in that
said housing or housings (2), respectively, includes or include cavities (3, 4, 5, 6) which correspond to the organ tract of the post-renal urinary ducts, with said cavities being connected to each other.

19. Training apparatus according to Claim 18, characterised in that said housing or housings (2), respectively, comprises or comprise a lower part (7) and an upper part (8), with said lower and upper parts being detachably connected to each other by means of a clamping mechanism.

20. Training apparatus according to Claim 18 or 19, characterised in that diagnostic modules or surgical modules can be inserted into the cavities of one or several training modules, with said training modules being made of synthetic material and with said training modules comprising a lower part and an upper part, and wherein said training modules or their lower part and their upper part are shell-shaped designs.

21. Training apparatus according to Claim 20, characterised in that specimens such as plastic specimens (plastic modules) or carneous tissue specimens or model specimens or animal organs or in vitro specimens can be inserted into said training modules.

22. Training apparatus according to Claim 20 or 21, characterised in that said training modules are adapted for being connected to each other.

23. Training apparatus according to any of the Claims 18 to 22, characterised in that said cavities and/or training modules are sealed from the outside and from each other by means of seals which present different diameters.

24. Training apparatus according to any of the Claims 18 to 23, characterised in that the interior of said cavities or said training modules, respectively, presents an anatomically true-to-nature design and/or that the interior of said cavities or said training modules, respectively, consists of synthetic resin, rubber or neoprene material or silicone.

## Revendications

1. Appareil d'entraînement à la pratique médicale comportant un boîtier, qui comporte au moins une cavité fermée de façon étanche et au moins une voie d'accès à cette cavité pour au moins un instrument endoscopique, qui comporte au moins un canal, par lequel un liquide et/ou un gaz peut être introduit dans la cavité, caractérisé en ce qu'il est prévu au moins une soupape, qui évacue le liquide ou le gaz, d'une manière réglable, hors de la cavité.

2. Appareil d'entraînement à la pratique médicale selon la revendication 1, caractérisé en ce que la voie d'accès est prévue pour au moins un instrument endoscopique et/ou un appareillage endoscopique.

3. Appareil d'entraînement à la pratique médicale selon la revendication 2, caractérisé en ce que le boîtier reste étanche même dans le cas de l'utilisation du ou des instruments endoscopiques.

4. Appareil d'entraînement à la pratique médicale selon l'une des revendications précédentes, caractérisé en ce que le boîtier est étanchéifié de telle sorte qu'une pression de liquide et/ou une pression de gaz peut être produite et/ou maintenue en son intérieur.

5. Appareil d'entraînement à la pratique médicale selon l'une des revendications précédentes, caractérisé en ce que plusieurs boîtiers sont prévus, qui peuvent être séparés les uns des autres d'une manière étanche.

6. Appareil d'entraînement à la pratique médicale selon l'une des revendications précédentes, caractérisé en ce que des éléments simulant des organes sont prévues dans un ou plusieurs boîtiers.

7. Appareil d'entraînement à la pratique médicale selon la revendication 6, caractérisé en ce que des canaux sont prévus dans les éléments simulant des organes.

8. Appareil d'entraînement à la pratique médicale selon la revendication 6 ou 7, caractérisé en ce que les éléments simulant des organes peuvent être fixés de façon amovible dans le ou les boîtiers au moyen d'un mécanisme de serrage.

9. Appareil d'entraînement à la pratique médicale pour l'hystéroscopie selon l'une des revendications précédentes, caractérisé par un boîtier, qui simule l'utérus et dont l'espace intérieur peut être fermé de façon étanche, et qu'une garniture d'étanchéité peut être insérée dans la partie simulant le col de l'utérus.

10. Appareil d'entraînement selon la revendication 9, caractérisé en ce que le boîtier est constitué par une partie inférieure (1) et par une partie supérieure (2), qui comportent des cavités (4,5) correspondant à l'utérus et aux ovaires, un module d'entraînement (30) pouvant être inséré dans la cavité.

11. Appareil d'entraînement selon la revendication 10, caractérisé en ce que la partie inférieure (1) et la partie supérieure (2) du boîtier peuvent être reliées entre elles de façon amovible au moyen d'un mécanisme de serrage.

12. Appareil d'entraînement selon l'une des revendications précédentes, caractérisé en ce que le module d'entraînement (3) possède une partie inférieure (9) et une partie supérieure (10).

13. Appareil d'entraînement selon l'une des revendications précédentes, caractérisé en ce que le module d'entraînement (3) ou sa partie inférieure (9) et sa partie supérieure (10) est ou sont réalisé(s) en forme de coque(s) (18).

14. Appareil d'entraînement selon l'une des revendications précédentes, caractérisé en ce que des préparations (19) sont prévues à l'intérieur du module d'entraînement (3).

15. Appareil d'entraînement selon l'une des revendications 10 à 14, caractérisé en ce que l'espace intérieur du boîtier peut être fermé de façon étanche.

16. Appareil d'entraînement selon l'une des revendications précédentes, caractérisé en ce que la ou les soupapes sont prévues, dans l'appareil d'entraînement et dans le module d'entraînement (3), dans les parties de l'appareil d'entraînement ou du module d'entraînement, qui simulent les deux conduits des trompes.

17. Appareil d'entraînement selon l'une des revendications précédentes, caractérisé en ce que la paroi avant du module d'entraînement (3) est réalisée en une matière flexible, comme par exemple une matière plastique, du caoutchouc ou du néoprène.

18. Appareil d'entraînement pour l'endoscopie selon l'une des revendications 1 à 9, caractérisé en ce que le ou les boîtiers (2) comportent des cavités (3, 4,5,6), qui correspondent à la chaîne d'organes des voies urinaires post-rénales, les cavités étant reliées entre elles.

19. Appareil d'entraînement selon la revendication 18, caractérisé en ce que le ou les boîtiers (2) comportent une partie inférieure (7) et une partie supérieure (8), qui sont reliées entre elles de façon amovible au moyen d'un mécanisme de serrage.

20. Appareil d'entraînement selon la revendication 18 ou 19, caractérisé en ce que des modules de diagnostic ou des modules opérationnels peuvent être insérés dans les cavités d'un ou de plusieurs modules d'entraînement, les modules d'entraînement étant réalisés en matière plastique, et les modules d'entraînement comportant une partie inférieure et une partie supérieure et les modules d'entraînement ou leur partie inférieure et leur partie supérieure étant réalisés en forme de coques.

21. Appareil d'entraînement selon la revendication 20, caractérisé en ce que des préparations, par exemple des préparations en matière plastique (modules en matière plastique) ou des préparations formées de viande ou des préparations de modèles ou des organes d'animaux ou des préparations in vitro peuvent être insérés dans les modules d'entraînement.

22. Appareil d'entraînement selon la revendication 20 ou 21, caractérisé en ce que les modules d'entraînement peuvent être reliés entre eux.

23. Appareil d'entraînement selon l'une des revendications 18 à 22, caractérisé en ce que les cavités et/ou les modules d'entraînement sont fermés de façon étanche vis-à-vis de l'extérieur et les uns par rapport aux autres à l'aide de garnitures d'étanchéité, les garnitures d'étanchéité possédant des diamètres différents.

24. Appareil d'entraînement selon l'une des revendications 18 à 23, caractérisé en ce que les espaces intérieurs des cavités ou des modules d'entraînement sont conçus de manière à être adaptés à la configuration anatomique naturelle et/ou que les espaces intérieurs des cavités ou des modules d'entraînement sont réalisés en matière plastique, en caoutchouc ou en un matériau néoprène ou en silicone.
